# EUROPEAN PATENT APPLICATION

(11) **EP 1 691 372 A2**
(43) Date of publication of application: **16.08.2006**
(21) Application number: 06425043.4
(22) Date of filing: 30.01.2006
(51) Int. Cl.: G11B 33/04

(54) **Container for a plurality of discs, particularly compact discs, DVD and like**

(30) Priority: 07.02.2005 IT RM20050053
(71) Applicant: Due-Ci S.r.l., 60026 Numana AN (IT)
(72) Inventor: Carloni, Carlo, c/o Due CI S.r.l., 60026 Numana (AN) (IT)
(74) Representative: Iannone, Carlo Luigi

(57) **Abstract**

The invention relates to a container for at least two discs, particularly Compact Disc, DVD and like, characterised in that it provides at least two tray elements (2) for supporting said at least two discs by central retaining means (4) engaging with the central hole of the disc, said at least two tray elements (2) being provided one above the other, and slidingly coupled each other so as to have two positions, respectively a closure position, wherein they are juxtaposed each other, with the discs coaxial each other, and an opening position, wherein the upper tray element (2) is completely displaced with respect to the lower tray element (2), so that no juxtaposition exists between the discs housed within the tray elements (2).

## Description

The present invention relates to a container for a plurality of discs, particularly compact discs, DVD and like.

More specifically, the invention relates to a container for discs, said container having reduced dimensions, and studied and realised particularly for allowing easy extraction of each one of the discs contained therein.

As it is well known, many containers for discs, either CD (Compact Discs) or DVD (Digital Video Disc) are available on the market, said containers being for example used as selling packagings.

In order to allow the introduction of a plurality of discs and at the same time their protection, containers have been proposed that usually are made up of plastics, and providing one or more inner circular seatings, said seatings having retaining means provided centrally.

An example of this kind of container is described in the DE patent n° 8702353U. In the preferred embodiment described in this patent, a depression is provided on the perimeter of the circular seating, in order to permit the insertion of a finger, for an easier removal of the disc contained therein.

This kind of container has the drawback of being very bulky, even for containing only two discs. Therefore, said device does not permit housing a higher number of discs.

Two devices allowing transporting a plurality of discs and at the same time protecting the same discs are those described in patents WO 9215505 and US 5322162. The first one describes a container having a plurality of housings on which discs can be placed and fixed, said housings being hinged to an outer container. Instead, the second one provides a plurality of housings juxtaposed, wherein the discs can be fixed. Said housings are hinged along a single axis.

The above devices, notwithstanding permit extracting discs independently, are rather complex to realise and bulky.

A simpler device is that described in the EP patent 0676731 B1. Said patent describes a "tray" body, provided with a housing suitable to contain at least two discs. Said tray body is realised in such a way that:
- discs are fixed by suitable means through the central hole;
- two discs are placed so as to be divided each other;
- said two housings are realised in such a way that said two discs juxtapose each other, maintaining the same discs offset each other.

Said container, although simple to realise, has the drawback of not permitting extraction of the first disc without removing first the other one (or the other ones), thus not being convenient to use.

Object of the present invention is therefore that of suggesting a container for discs that is compact, permitting protecting discs and at the same time extracting the same independently each other.

Another object of the present invention is that of permitting an easy realisation of the container.

It is therefore specific object of the present invention a container for at least two discs, particularly Compact Disc, DVD and like, characterised in that it provides at least two tray elements for supporting said at least two discs by central retaining means engaging with the central hole of the disc, said at least two tray elements being provided one above the other, and slidingly coupled each other so as to have two positions, respectively a closure position, wherein they are juxtaposed each other, with the discs coaxial each other, and an opening position, wherein the upper tray element is completely displaced with respect to the lower tray element, so that no juxtaposition exists between the discs housed within the tray elements.

Always according to the invention, the upper tray element can provide an opening for observing the upper surface of the disc housed in the lower tray element.

Still according to the invention, said upper tray element can have part of its surface knurled.

Advantageously, said tray elements can provide at least a notch for easing the extraction of the disc.

Preferably, according to the invention, said tray elements can provide four notches for easing the extraction of the disc.

The present invention will be now described, for illustrative but not limitative purposes, according to its preferred embodiments, with particular reference to the figures of the enclosed drawings, wherein:
figure 1 is a top view of the container for discs according to the invention in a closed position;
figure 2 shows a first lateral section view of the container for discs according to figure 1;
figure 3 shows a second lateral section view of the container for discs according to figure 1;
figure 4 is a top view of the container for discs according to the invention in an open position;
figure 5 shows a lateral section view of the container for discs according to figure 4;
figure 6 is a top view of a second embodiment of the container for discs according to the invention in a closed position, particularly suitable for DVD;
figure 7 is a top view of the second embodiment of the container for discs according to the invention in an open position;
figure 8 shows a lateral section view of the container for discs according to figure 7;
figure 9 is a top view of a third embodiment of the container for discs according to the invention in a closed position, particularly suitable for DVD; and
figure 10 is a top view of the third embodiment of the container for discs according to the invention in a closed position.

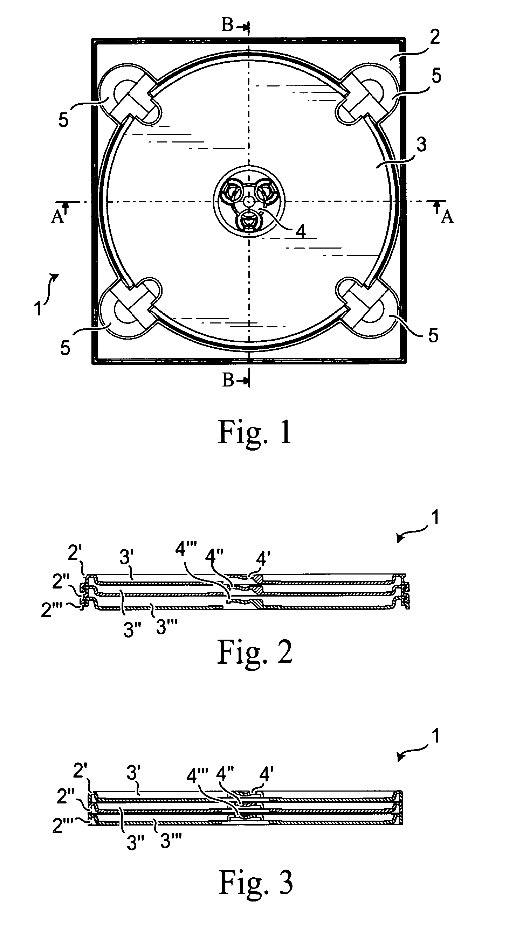

Making reference to figures 1, 2 and 3, it is possible observing the container 1 for discs according to the present invention, when it is closed.

From the figures, it is possible noting the tray elements 2, on each one of which a seating 3 is realised. Said seating 3 is of circular shape, for receiving a Compact Disc (not shown in the figures). Said seating 3 provides a central elastic pin 4 or retaining means. Said pin 4 engages with the central hole of the disc.

Container 1 of the present embodiment provides three tray elements 2, said elements 2 being, when closed, juxtaposed each other. In this position, discs are completely juxtaposed each other.

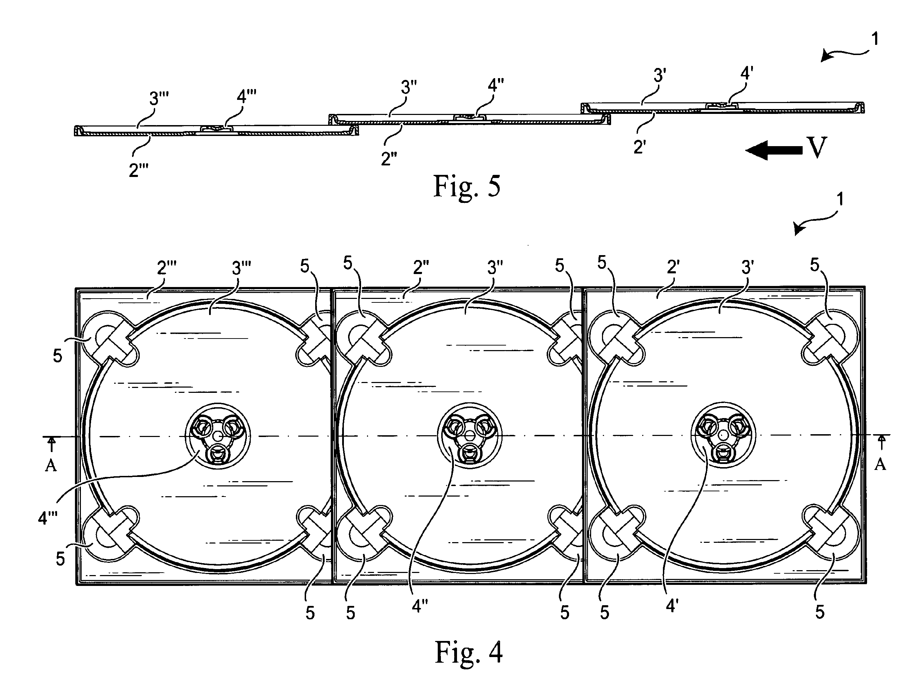

Said tray elements 2 are coupled each other in such a way to slide. In figures 4 and 5 it is possible observing the sliding of said tray elements 2 according to the V direction.

As it is possible noting, when container 1 is open, it is possible reaching the three tray elements 2 so as to extract the Compact Disc contained in the seating 3 of each one of them. Particularly, it can be noted that it is for example possible extracting disc contained in seating 3" without being necessary extracting the disc contained within the seating 3', which is above the seating 3", or within the seating 3"', which is under the seating 3".

In order to make the extraction of the Compact Disc much easier, each tray element 2 provides at least a notch 5, obtained on the perimeter of the seating 3. In the embodiment represented in the figures, four notches 5 are provided for each seating 3 of each tray element 2.

In order to extract a disc from each seating 3, it is therefore necessary making one or more tray elements 2 completely sliding until being able reaching the specific disc, pushing the elastic pin 4 by a finger, and then introducing a finger in one of said notches 5 thus extracting the disc.

The lower tray element 2 can be coupled to each kind of support, for example comprised of paperboard, plastics, or to a box. This allows realising different disc packagings employing the above container 1.

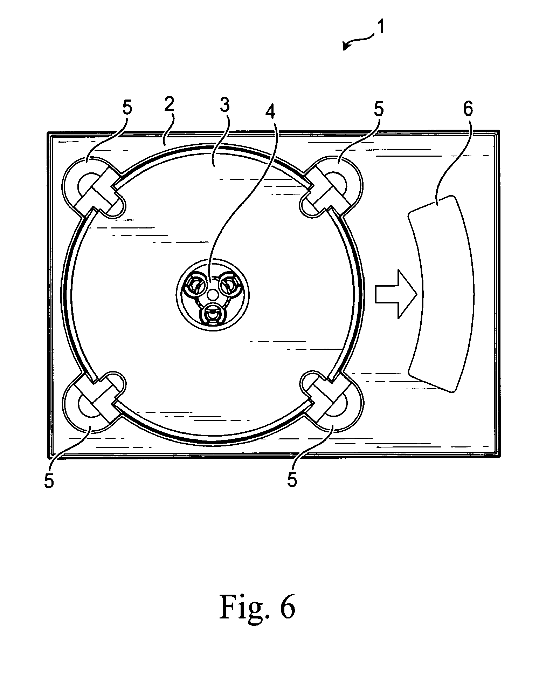

Further embodiments of the present invention are shown in figures 6 - 10. Figures 6, 7 and 8 show a container 1 particularly suitable for DVD. As it can be observed, it is different with respect to the container 1 for CD described in the above only for the dimensions of the tray element 2, to conform to the usual commercial standards. It is in fact known that CD and DVD have the same diameter.

On the upper surface of the tray element 2, a knurled area is provided. Said area, besides obtaining and aesthetic effect, permits easing the sliding of the upper tray element 2 with respect to the lower ones.

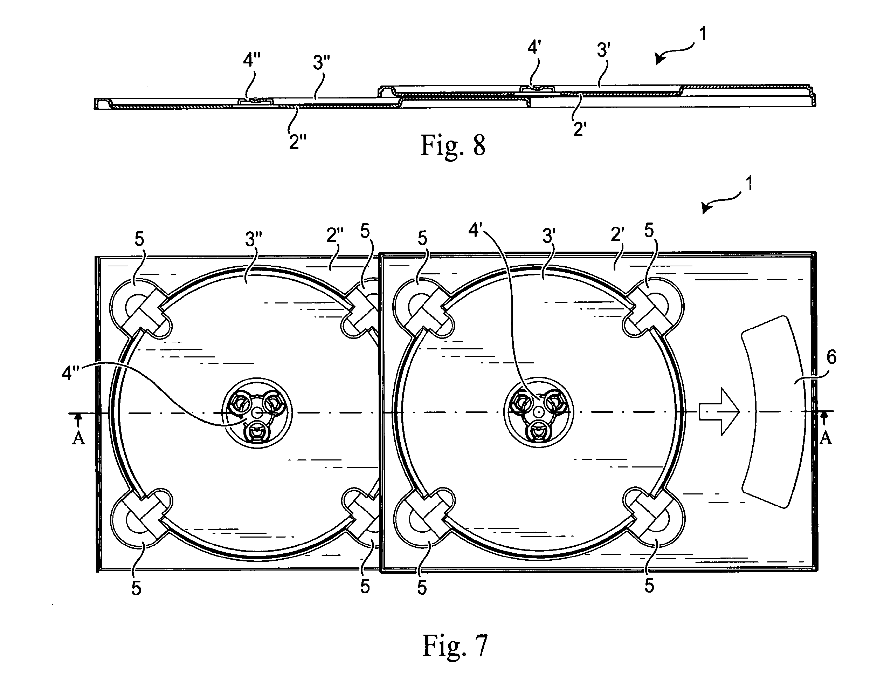

Figures 7 and 8 show container 1 open and with two tray elements 2. as it can be noted, also in this case it is ensured the possibility of reaching DVD housed in seating 3", without the needing of extracting DVD contained in the upper housing 2'.

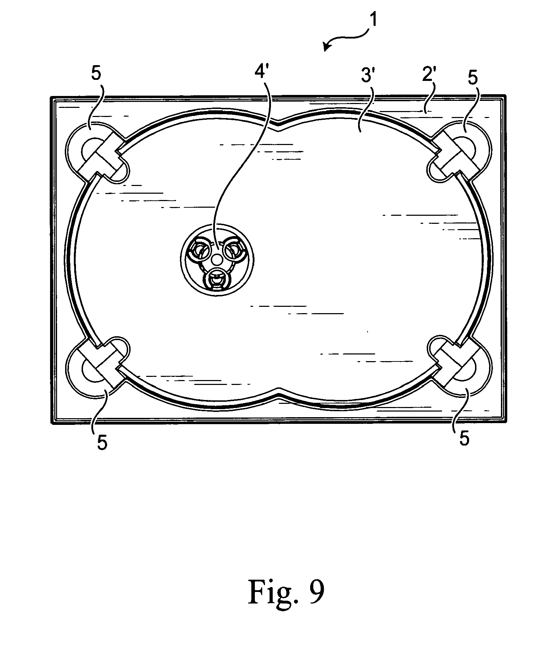

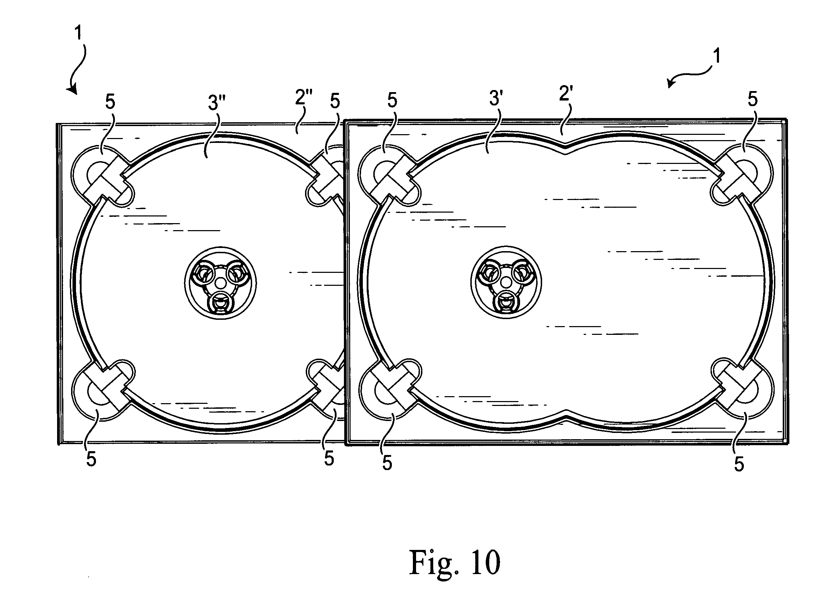

Figures 9 and 10 show a third embodiment of container 1. In this case, housing 3' has an "8" shape, permitting to the user of seeing the tray elements 2 and thus the number of discs housed within the container 1. Obviously, in this case too when the container 1 is closed, all the discs are completely juxtaposed each other.

On the basis of the above description, it can be inferred that a the basic feature of the present invention is that of permitting reaching each disc housed within the container without extracting the other discs, and at the same time maintaining very compact dimensions.

A further advantage of the present invention is that being applicable on a large variety of supports.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Container for at least two discs, particularly Compact Disc, DVD and like, **characterised in that** it provides at least two tray elements for supporting said at least two discs by central retaining means engaging with the central hole of the disc, said at least two tray elements being provided one above the other, and slidingly coupled each other so as to have two positions, respectively a closure position, wherein they are juxtaposed each other, with the discs coaxial each other, and an opening position, wherein the upper tray element is completely displaced with respect to the lower tray element, so that no juxtaposition exists between the discs housed within the tray elements.

2. Container according to claim 1, **characterised in that** the upper tray element provides an opening for observing the upper surface of the disc housed in the lower tray element.

3. Container according to one of the preceding claims, **characterised in that** said upper tray element have part of its surface knurled.

4. Container according to one of the preceding claims, **characterised in that** said tray elements provide at least a notch for easing the extraction of the disc.

5. Container according to claim 4, **characterised in that** said tray elements provide four notches for easing the extraction of the disc.

6. Container according to each one of the preceding claims, substantially as illustrated and described.
